Europäisches Patentamt

European Patent Office

Office européen des brevets

(19)

(11) Veröffentlichungsnummer: **0 344 345 B1**

# EUROPÄISCHE PATENTSCHRIFT

(12)

(45) Veröffentlichungstag der Patentschrift: **18.09.91**

(51) Int. Cl.⁵: **G01M 3/20**, G01M 3/22

(21) Anmeldenummer: **88108769.6**

(22) Anmeldetag: **01.06.88**

(54) **Pumpsystem für ein Lecksuchgerät.**

(43) Veröffentlichungstag der Anmeldung:
**06.12.89 Patentblatt 89/49**

(45) Bekanntmachung des Hinweises auf die
Patenterteilung:
**18.09.91 Patentblatt 91/38**

(84) Benannte Vertragsstaaten:
**CH DE FR GB LI**

(56) Entgegenhaltungen:
EP-A- 0 245 843
DE-A- 2 049 117
DE-A- 3 133 781
FR-A- 2 604 522

(73) Patentinhaber: **LEYBOLD AKTIENGESELL-
SCHAFT
Bonner Strasse 498
W-5000 Köln 51(DE)**

(72) Erfinder: **Reich, Günter, Dr.
Vochemerstrasse 9
W-5000 Köln 51(DE)**
Erfinder: **Worthington, William C.
966 Westcott Street
Syracuse New York 13210(US)**

(74) Vertreter: **Leineweber, Jürgen, Dipl.-Phys.
Nagelschmiedshütte 8
W-5000 Köln 40(DE)**

**Beschreibung**

Die Erfindung bezieht sich auf ein Pumpsystem für ein nach dem Gegenstromprinzip arbeitendes Lecksuchgerät mit einer ersten Turbomolekularpumpenstufe, deren Eingang dem Anschluß eines Prüflings oder Prüfrezipienten dient, mit einer zweiten Turbomolekularpumpenstufe, deren Einlaß dem Anschluß eines Testgasdetektors dient, wobei beide Turbomolekularpumpenstufen auf einer gemeinsamen Welle angeordnet sind, und mit einer den Auslässen der Turbomolekularpumpenstufen zugeordneten Vorvakuumpumpe.

Die Untersuchung von Prüflingen auf Dichtheit kann dadurch erfolgen, daß der Prüfling evakuiert und von außen mit Testgas besprüht wird. Bei kleineren Prüflingen ist es bekannt, diese mit Testgas zu füllen und in einen Rezipienten einzubringen, welcher danach evakuiert wird. Dringt Testgas durch die Wandung eines Prüflings hindurch, dann ist dieser undicht. Mit Hilfe eines Testgasdetektors, der an die Evakuierungsleitung angeschlossen wird, kann die Tatsache des Vorliegens eines undichten Prüflings festgestellt werden. Als Testgasdetektor wird dabei in der Regel ein Massenspektrometer verwendet, das auf die Masse des Testgases, vorzugsweise Helium, also auf die Masse 4 eingestellt ist. Massenspektrometer können jedoch nur bei einem Druck von $< 10^{-3}$ mbar, vorzugsweise etwa $10^{-4}$ mbar, betrieben werden, während der Druck, bei dem die Lecksuche stattfindet, wesentlich höher sein kann. Es ist deshalb bekannt, die das Massenspektrometer evakuierende Hochvakuumpumpe im Gegenstrom vom Testgas durchströmen zu lassen (vgl. z. B. die DE-OS 19 37 271).

Um ein hohes Saugvermögen am Prüfling zur Verkürzung der Einstellzeit ohne Reduzierung der Empfindlichkeit zu erreichen, ist es zweckmäßig, die Lecksuche bei Drücken zu betreiben, die auch für die Evakuierung des Prüflings bzw. des Prüfrezipienten den Einsatz einer Hochvakuumpumpe erfordern. Aus den deutschen Offenlegungsschriften 16 48 648, 20 49 117 und 31 33 781 ist es bekannt, dazu eine Turbomolekularpumpe mit zwei Pumpstufen zu verwenden, von denen die eine der Evakuierung des Massenspektrometers und die andere der Evakuierung des Prüflings bzw. Prüfrezipienten dient. Dabei hat es sich als zweckmäßig erwiesen, die beiden Turbomolekularpumpenstufen auf einer gemeinsamen Welle anzuordnen, um so den Aufwand für die Evakuierungseinrichtungen (Hochvakuumpumpen, Vorvakuumpumpen) möglichst klein zu halten.

Bei Lecksucheinrichtungen mit Pumpsystemen der vorbeschriebenen Art ist die Vorpumpe in der Regel das Element, das maßgeblichen Einfluß auf die Empfindlichkeit der Lecksuche hat. Ursache ist zum einen der Heliumgehalt der Luft, der auf der Einlaßseite der Vorvakuumpumpe einen Helium-Partialdruck erzeugt, der bei der hochempfindlichen Lecksuche nicht mehr zu vernachlässigen ist. Besonders nachteilig ist dabei, daß dieser Heliumpartialdruck unregelmäßigen Schwankungen unterworfen ist, so daß er bei der Auswertung der Meßergebnisse nicht als Konstante eliminiert werden kann. Vermutlich beruhen die häufig sehr starken, unregelmäßig auftretenden Schwankungen des Heliumpartialdruckes auf Blasen, die sich im Bereich kleinster Undichtigkeiten in der ölgedichteten Vorvakuumpumpe bilden, sich gelegentlich ablösen, auf die Einlaßseite der Vorvakuumpumpe gelangen und dort platzen. Weiterhin tritt nach einem besonders großen Leck eine die Empfindlichkeit beeinträchtigende Störung im Bereich der Vorvakuumpumpe auf. Diese Störung beruht darauf, daß sich ein Teil des relativ großen Heliums chlucks im Öl der Vorvakuumpumpe löst. Das nach und nach wieder ausgasende Helium verursacht einen erhöhten Heliumpartialdruck im Einlaßbereich der Vorvakuumpumpe, der so groß sein kann, daß unmittelbar folgende Messungen verfälscht sind. Längere Erholzeiten sind deshalb bei Lecksuchgeräten mit Pumpsystemen der vorbeschriebenen Art unvermeidlich.

Der vorliegenden Erfindung liegt die Aufgabe zugrunde, ein Pumpsystem der eingangs genannten Art zu schaffen, bei dem die Störanfälligkeiten durch Helium-Untergrund im Bereich der Vorvakuumpumpe reduziert sind.

Erfindungsgemäß wird diese Aufgabe dadurch gelöst, daß in einem Pumpsystem der eingangs genannten Art jeder der Turbomolekularpumpenstufen eine als Molekularpumpe gestaltete Pumpenstufe - in Richtung des Druckanstieges - nachgeordnet ist, daß die Molekularpumpenstufen auf der Welle der Turbomolekularpumpenstufen angeordnet sind und daß eine Verbindung zwischen einerseits dem Übergangsbereich von der ersten Turbomolekularpumpenstufe zur ersten Molekularpumpenstufe und andererseits dem Übergangsbereich von der zweiten Turbomolekularpumpenstufe zu der zweiten Molekularpumpenstufe besteht.

Molekularpumpen gehören zusammen mit den Turbomolekularpumpen zu den Reibungspumpen, deren Wirkungsweise in dem Lehrbuch von Wutz, Adam und Walcher "Theorie und Praxis der Vakuumtechnik", S. 202 ff. beschrieben ist. Bei Molekularpumpen sind eine sich bewegende Rotorwand und eine ruhende Statorwand so gestaltet und beabstandet, daß die von den Wandungen auf dazwischen befindliche Gasmoleküle übertragenen Impulse eine bevorzugte Richtung haben. In der Regel sind Rotor- und/oder Statorwand mit spiral- bzw. wendelförmigen Vertiefungen oder Vorsprüngen zur Erzielung der bevorzugten Förderrichtung ausgerüstet. Die Pumpeigenschaften (Saugvermögen: Volumendurchfluß durch die Ansaugöffnung der Pumpe; Kompression: gasartabhängiges Druckverhältnis zwischen Auslaßdruck und Einlaßdruck) hängen von der Gestaltung (Tiefe, Breite, Steigung und dergleichen) der gewindeähnlichen Oberflächen ab. Es ist deshalb möglich, bestimmte Pumpeigenschaften durch eine besondere Gestaltung der pumpaktiven Flächen zu erreichen. Das bei Molekularpumpen im Vergleich zu Turbomolekularpumpen grundsätzlich nicht sehr hohe Saugvermögen kann z. B. derart reduziert werden, daß die Molekularpumpe quasi nur die Funktion einer Abdichtung (Molekulardichtung) hat, während die Kompression dabei sehr hohe Werte annehmen kann.

Bei einem erfindungsgemäß ausgebildeten Pumpsystem verhindern die den Turbomolekularpumpstufen jeweils nachgeordneten Molekularpumpenstufen weitestgehend, daß sich Veränderungen des Helium-Untergrundes im Einlaßbereich der Vorvakuumpumpe im Massenspektrometer auswirken. Die Molekularpumpstufen unterstützen praktisch die Wirkung der Vorvakuumpumpe, so daß der Aufwand dafür nicht erhöht werden muß. Der zusätzliche Aufwand bei den Hochvakuumpumpenstufen ist gering, da die Molekularpumpenstufen mit den Turbomolekularpumpenstufen auf einer Welle angeordnet sind.

Zweckmäßig ist es, eine der beiden Molekularpumpenstufen so auszubilden, daß ihr Saugvermögen möglichst klein und ihre Kompression möglichst groß ist. Das Saugvermögen der anderen Molekularpumpenstufe muß ausreichend groß bleiben, um die - auch im Falle eines Lecks aus dem Prüfling bzw. Prüfrezipienten während der Lecksuche zu entfernenden Gase zur Vorvakuumpumpe zu fördern. Bei einem in dieser Weise ausgebildeten Pumpsystem dient die Molekularpumpenstufe mit dem größeren Saugvermögen dazu, den für die Durchführung der Gegenstromlecksuche erforderlichen Gasstrom zu erzeugen und aufrechtzuerhalten. Die Molekularpumpenstufe mit der hohen Kompression und dem geringen Saugvermögen verhindert, daß sich Schwankungen des Helium-Partialdruckes im Einlaßbereich der Vorvakuumpumpe im Massenspektrometer auswirken.

Weitere Vorteile und Einzelheiten der Erfindung sollen anhand von in den Figuren 1 bis 6 dargestellten Ausführungsbeispielen erläutert werden. Es zeigen

- Figur 1 eine Prinzipskizze des erfindungsgemäßen Pumpsystems,
- Figur 2 ein praktisches Ausführungsbeispiel und
- Figuren 3 bis 6 durch Leitungen und Ventile ergänzte Ausführungsformen des Pumpsystems nach Figur 1.

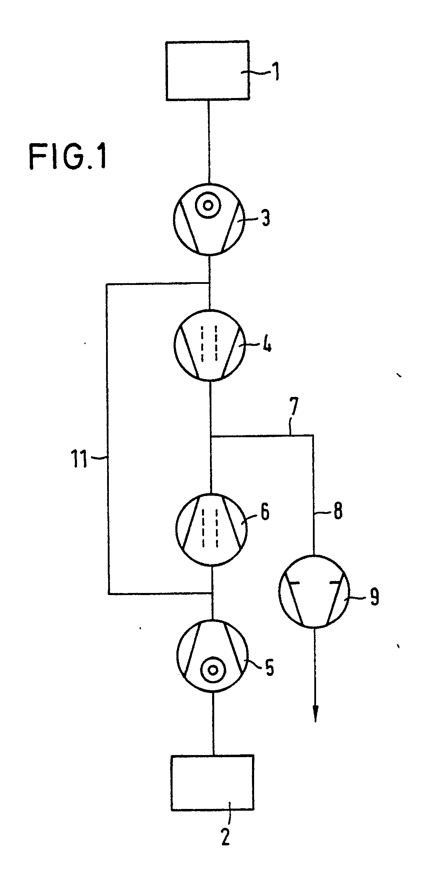

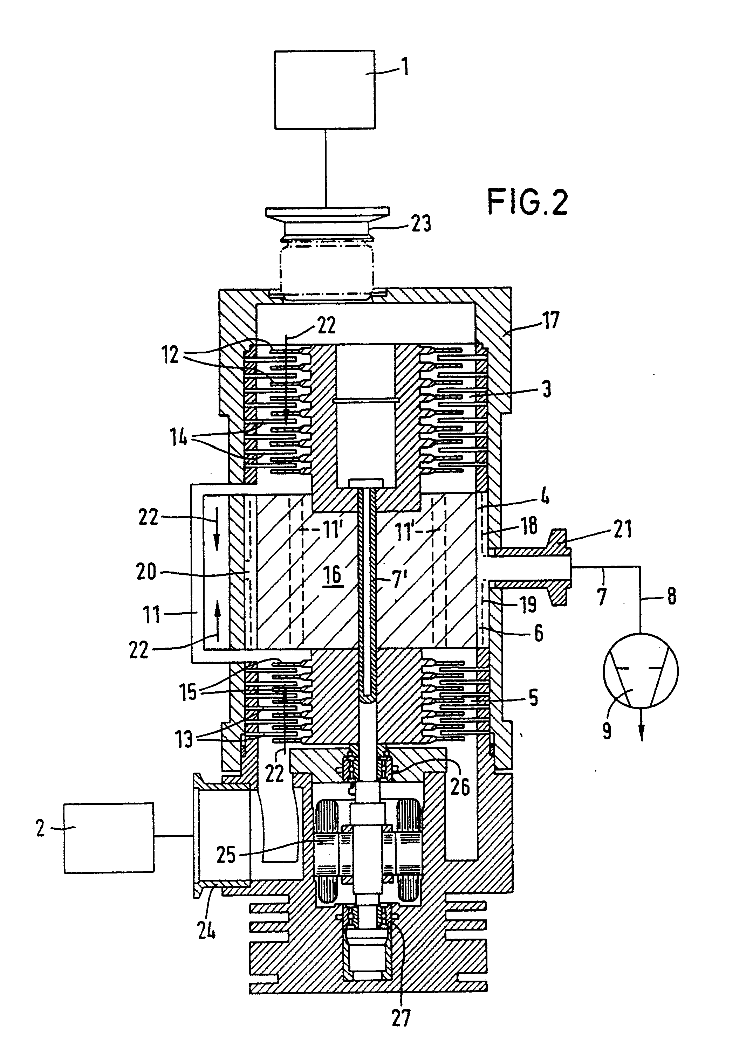

Bei der Ausführung nach Figur 1 sind der Prüfling bzw. Prüfrezipienten mit 1 und der Testgasdetektor, vorzugsweise ein Massenspektrometer, mit 2 bezeichnet. Zur Evakuierung des Prüflings bzw. Prüfrezipienten 1 dienen die Turbomolekularvakuumpumpenstufe 3 und die Molekularpumpenstufe 4. Diese Pumpenstufen sind mit einer weiteren Turbomolekularpumpenstufe 5 und einer weiteren Molekularpumpenstufe 6 auf einer gemeinsamen Welle 7 (Figur 2) angeordnet. Die Pumpenstufen 5 und 6 dienen der Erzeugung des notwendigen Arbeitsdruckes im Massenspektrometer 2. An die miteinander verbundenen Auslässe der Molekularpumpenstufen 4 und 6 schließt sich über Leitungsabschnitte 7, 8 die Vorvakuumpumpe 9 an, die z. B. eine Drehschieberpumpe sein kann. Der Übergangsbereich von der ersten Turbomolekularpumpenstufe 3 zur ersten Molekularpumpenstufe 4 und der Übergangsbereich von der zweiten Turbomolekularpumpenstufe 5 zu der zweiten Molekularpumpenstufe 6 sind über die Leitung 11 miteinander verbunden.

Geht man davon aus, daß die Molekularpumpenstufe 6 diejenige Pumpenstufe ist, die ein möglichst geringes Saugvermögen hat, dann erfolgt das Abfördern der Gase aus dem Prüfrezipienten 1 über die Pumpenstufen 3, 4 sowie über die Leitungsabschnitte 7, 8 und die Vorvakuumpumpe 9. Für den Fall eines Lecks gelangt Testgas über die Leitung 11 und - im Gegenstrom - durch die Turbomolekularpumpenstufe 5 zum Massenspektrometer 2. Die Molekularpumpenstufe 6 hat lediglich eine Sperrfunktion, d. h. sie verhindert, daß sich Störungen im Bereich der Vorvakuumpumpe 9 im Massenspektrometer 2 auswirken.

Aus dem praktischen Ausführungsbeispiel nach Figur 2 ist ersichtlich, daß die beiden Molekularpumpenstufen 4 und 6 mit den beiden Turbomolekularpumpenstufen 3, 5 auf einer gemeinsamen Welle 7' befestigt sind. Die Turbomolekularpumpenstufen 3 und 5 weisen jeweils Rotorschaufeln 12 bzw. 15 und Statorschaufeln 14 bzw. 13 auf. Zur Bildung der Molekularpumpenstufen 4 und 6 ist eine rotierende Trommel 16 mit glatter zylindrischer Oberfläche vorgesehen. Die Innenseite des Gehäuses 17 weist Gewindeabschnitte 18 und 19 auf, die in der gewünschten Weise gestaltet sind und gemeinsam mit der glatten Zylinderoberfläche der Trommel 16 die Molekularpumpenstufen 4 und 6 bilden. Zwischen den Gewindeabschnitten 18, 19 befindet sich ein Ringraum 20, der mit einem Anschlußstutzen 21 verbunden ist. An den Ringraum 20 bzw. am Anschlußstutzen 21 ist die Vorvakuumpumpe 9 angeschlossen. Natürlich können sich die Gewindeabschnitte 18, 19 auch auf der Oberfläche der Trommel 16 befinden und mit einer glatten Statorfläche die Molekularpumpenstufen 4, 6 bilden.

Die im Bereich einer jeden Pumpenstufe eingezeichneten Pfeile 22 lassen die jeweilige Förderrichtung erkennen. Die Anschlüsse 23 und 24 für den Prüfling bzw. Prüfrezipienten 1 und das Massenspektrometer 2 sind den Förderrichtungen entsprechend in den stirnseitigen Bereichen des Gehäuses 17 angeordnet. Dem Antrieb der Welle 7 dient ein auf einer der beiden Stirnseiten befindlicher Antriebsmotor 25. Die Welle 7 ist auf der motorseitigen Stirnseite des Gehäuses 17 über die Lagerungen 26 und 27 im Gehäuse 17 drehbar gehalten.

Die für die Durchführung der Gegenstromlecksuche erforderliche Verbindung zwischen den beiden Übergangsbereichen von den Turbomolekularstufen 3 bzw. 5 zu den Molekularpumpenstufen 4 bzw. 6 ist eine außerhalb des Gehäuses 17 geführte Bypaßleitung 11. Anstelle dieser Bypaßleitung 11 können auch eine oder mehrere axial gerichtete Bohrungen 11' in der Trommel 16 vorgesehen sein, die die beiden Übergangsbereiche miteinander verbinden.

Die Trommel 16 kann verschiedenartig gestaltet sein, z. B. wie in Figur 2 dargestellt, im wesentlichen massiv. Um ihre Masse zu reduzieren, kann sie auch hohl - mit einem zu den Pumpenräumen hin abgeschlossenen Innenraum - ausgebildet sein.

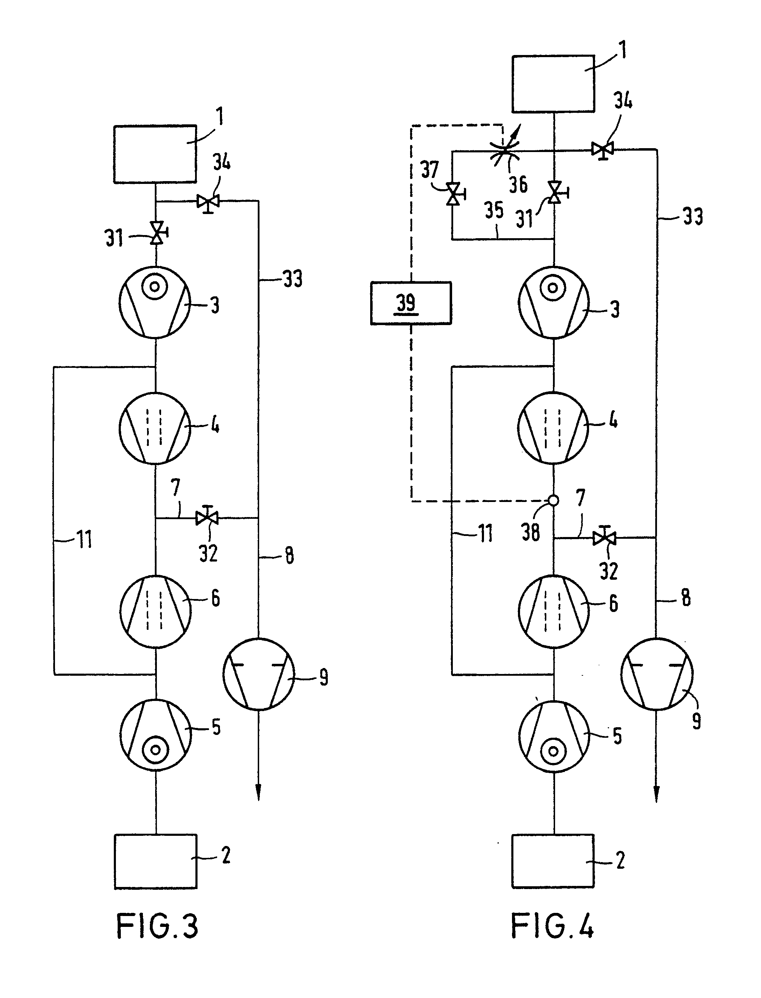

Bei der Ausführungsform nach Figur 3 sind zwischen dem Prüfling bzw. Prüfrezipienten 1 und der ersten Turbomolekularpumpenstufe 3 sowie in dem Leitungsabschnitt 7 Ventile 31 bzw. 32 angeordnet. Außerdem ist eine direkt vom Prüfling bzw. Prüfrezipienten 1 zum Leitungsabschnitt 8 führende Leitung 33 mit dem Ventil 34 vorgesehen. Diese Anordnung erlaubt es, den Prüfling bzw. Prüfrezipienten vor der Durchführung der Lecksuche mit Hilfe der Vorvakuumpumpe 9 auf den für die Zuschaltung der Turbomolekularpumpenstufe 3 nötigen Vorvakuumdruck (ca. 0,1 mbar) über die Leitung 33 mit dem Ventil 34 zu evakuieren. Danach werden das Ventil 34 geschlossen und die Ventile 31, 32 geöffnet, so daß mit der Lecksuche begonnen werden kann.

Um auch grobe Lecks feststellen zu können, ist es wünschenswert, bereits vor dem Ereichen des für die Zuschaltung der Turbomolekularpumpenstufe 3 erforderlichen Druckes im Prüfling bzw. Prüfrezipienten 1 mit der Lecksuche beginnen zu können. Dazu ist bei der Ausführungsform nach Figur 4 eine das Ventil 31 überbrückende Bypaßleitung 35 mit einer Drossel 36 und einem Ventil 37 vorgesehen. Bei dieser Anordnung kann mit der Lecksuche bereits begonnen werden, wenn im Auslaßbereich der Molekularpumpenstufen ein Druck erreicht wird, der - je nach Gestaltung der Molekularpumpenstufen - um ca. den Faktor 100 über dem Druck liegt, bei dem die Turbomolekularpumpenstufe 3 unmittelbar mit dem Prüfling bzw. Prüfrezipienten 1 verbunden werden kann. Dazu wird nach dem Erreichen des Maximaldruckes im Auslaßbereich der Molekularpumpenstufen 4, 6, z. B. bei ca. 10 mbar, das Ventil 37 geöffnet. Die Drossel 36 muß so ausgebildet sein, daß der kritische Einlaßdruck der Turbomolekularpumpenstufe 3 (ca. 0,1 mbar) nach dem Öffnen des Ventils 37 nicht überschritten wird. Mit sinkendem Vorvakuumdruck kann die Drossel 36 weiter geöffnet werden. Zweckmäßig ist sie deshalb regelbar ausgebildet, und zwar in Abhängigkeit vom Vorvakuumdruck. Um diese Regelung durchführen zu können, ist ein Drucksensor 38 vorgesehen, der seine Signale einer Steuereinheit 39 zuführt. Diese ist über eine Steuerleitung mit der regelbaren Drossel 36 verbunden. Ist ein grobes Leck vorhanden, dann gelangt Testgas über die Bypaßleitung 35, die Turbomolekularpumpenstufe 3, die Bypaßleitung 11 und im Gegenstrom durch die Turbomolekularpumpenstufe 5 zum Massenspektrometer 2.

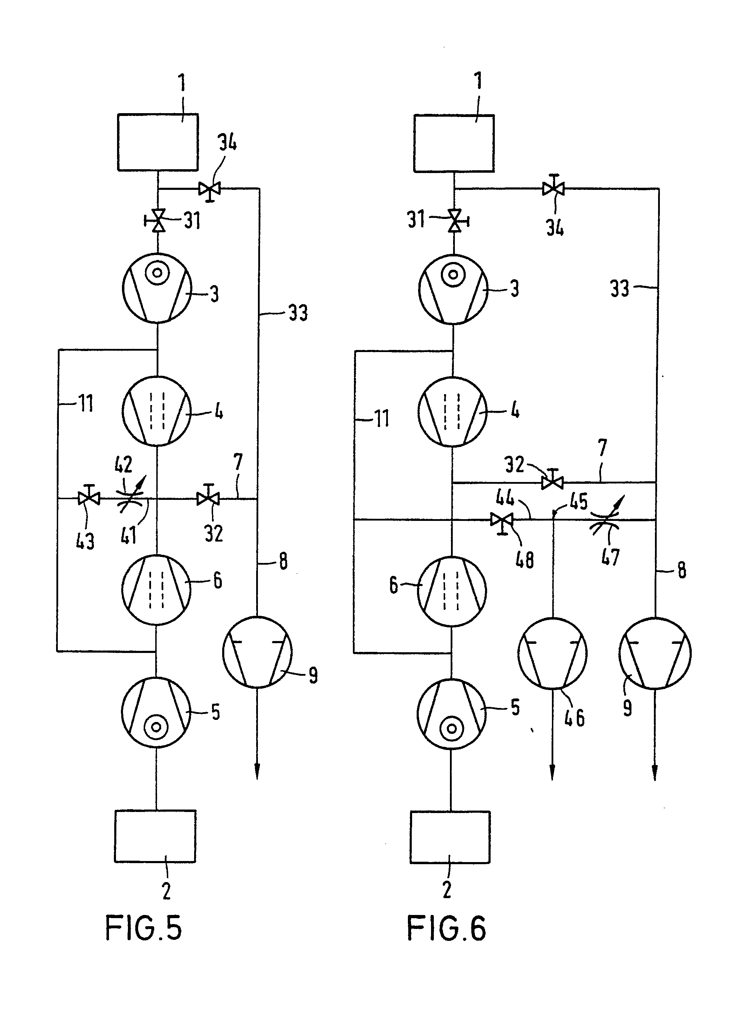

Bei der Ausführungsform nach Figur 5 ist die Bypaßleitung 11 mit dem Auslaßbereich der Molekularpumpenstufen 4, 6 über die Leitung 41 mit der Drossel 42 und dem Ventil 43 verbunden. Auch bei dieser Ausführungsform kann vor dem Erreichen des für die Zuschaltung der Turbomolekularpumpenstufe 3 erforderlichen Druckes im Prüfling bzw. Prüfrezipienten 1 mit der Lecksuche begonnen werden. Dieses geschieht dadurch, daß nach dem Erreichen des maximalen Druckes im Auslaßbereich des Molekularpumpenstufen (ca. 10 mbar) die Ventile 32 und 43 geöffnet werden. Die Drossel ist wieder so - vorzugsweise regelbar - ausgebildet, daß der Auslaßdruck der Turbomolekularpumpenstufen 3, 5 seinen kritischen Wert ca. 0,1 mbar) nach dem Öffnen des Ventils 43 nicht übersteigt. Bei einem Grobleck gelangt das Testgas über die Leitungen 33, 7, 41 und 11 sowie im Gegenstrom über die Turbomolekularpumpenstufe 5 zum Massenspektrometer 2.

Figur 6 zeigt ein Ausführungsbeispiel, bei dem bereits zu Beginn der Evakuierung des Prüflings bzw. Prüfrezipienten 1 mit einer Groblecksuche begonnen werden kann. Dazu ist eine Verbindungsleitung 44 vorgesehen, welche die Bypaßleitung 11 mit der Ansaugleitung 8 bzw. 33 der Vakuumpumpe 9 verbindet. An diese Verbindungsleitung ist bei 45 eine zweite Vakuumpumpe 46 angeschlossen. Zwischen dem Abzweigungspunkt 45 und der Ansaugleitung 8 bzw. 33 der Vakuumpumpe 9 befindet sich eine Drossel 47. Zwischen Verzweigungspunkt 45 und Bypaßleitung 11 ist ein Ventil 48 angeordnet. Die Drossel 47 muß so ausgebildet sein, daß unabhängig vom Druck in der Ansaugleitung 8 bzw. 33 der Vakuumpumpe 9 der Druck in der Bypaßleitung 11 bei geöffnetem Ventil 48 seinen kritischen Grenzwert nicht übersteigt. Für den Fall eines Groblecks wird mit der Vakuumpumpe 46 ein Teil der die Ansaugleitung der Vakuumpumpe 9 durchströmenden Gase abgesaugt. Davon wiederum gelangt ein Teil über das Ventil 48 und die Bypaßleitung 11 sowie im Gegenstrom durch die Turbomolekularpumpenstufe 5 zum Massenspektrometer 2. Die Drossel 47 ist vorzugsweise wieder regelbar ausgebildet und in Abhängigkeit vom Druck in der Ansaugleitung 8, 33 der Vakuumpumpe 9 steuerbar.

## Patentansprüche

1. Pumpsystem für ein nach dem Gegenstromprinzip arbeitendes Lecksuchgerät mit einer ersten Turbomolekularpumpenstufe (3), deren Eingang dem Anschluß eines Prüflings oder Prüfrezipienten (1) dient, mit einer zweiten Turbomolekularpumpenstufe (5), deren Einlaß dem Anschluß eines Testgasdetektors (2) dient, wobei beide Turbomolekularpumpenstufen (3, 5) auf einer gemeinsamen Welle (7') angeordnet sind, und mit einer den Auslässen der Turbomolekularpumpenstufen zugeordneten Vorvakuumpumpe (9), dadurch gekennzeichnet, daß jeder der Turbomolekularpumpenstufen (3, 5) eine als Molekularpumpe gestaltete Pumpenstufe (4 bzw. 6) nachgeordnet ist, daß die Molekularpumpenstufen (4, 6) auf der Welle (7') der Turbomolekularpumpenstufen (3, 5) angeordnet sind und daß eine Verbindung (11, 11') zwischen einerseits dem Übergangsbereich von der ersten Turbomolekularpumpenstufe (3) zu ihrer nachgeordneten Molekularpumpenstufe (4) und andererseits dem Übergangsbereich von der zweiten Turbomolekularpumpenstufe (5) zu ihrer nachgeordneten Molekularpumpenstufe (6) besteht.

2. Pumpsystem nach Anspruch 1, dadurch gekennzeichnet, daß die Anschlüsse (23, 24) für den Testgasdetektor (2) und für den Prüfling bzw. Prüfrezipienten (1) derart einander gegenüberliegend jeweils im Bereich einer äußeren Stirnseite des Pumpsystems angeordnet sind, daß die beiden Pumpenstufenpaare (3, 4 und 5, 6) während des Betriebs von außen nach innen durchströmt sind und daß zwischen den beiden Pumpenstufenpaaren ein gemeinsamer Vorvakuumanschluß (21) vorgesehen ist.

3. Pumpsystem nach Anspruch 2, dadurch gekennzeichnet, daß die Molekularpumpenstufen (4, 6) eine gemeinsame zylindrische Trommel aufweisen.

4. Pumpsystem nach Anspruch 3, dadurch gekennzeichnet, daß die Trommel (16) hohl ausgebildet und gegenüber den Pumpenräumen abgeschlossen ist.

5. Pumpsystem nach Anspruch 3 oder 4, dadurch gekennzeichnet, daß die Trommel (16) mit im wesentlichen axialen Kanälen (11') zur Herstellung der Verbindung zwischen den Übergangsbereichen der Turbomolekularpumpenstufen (3, 5) zu den Molekularpumpenstufen (4, 6) ausgerüstet ist.

6. Pumpsystem nach einem der vorhergehenden Ansprüche, dadurch gekennzeichnet, daß der Prüfling bzw. Prüfrezipient über eine Verbindungsleitung (33) mit einem Ventil (34) mit der Ansaugleitung (8) der Vorvakuumpumpe (9) verbindbar ist.

7. Pumpsystem nach Anspruch 6, dadurch gekennzeichnet, daß zwischen dem Prüfling bzw. Prüfrezipienten und der ersten Turbomolekularpumpenstufe (3) ein von einer Bypaßleitung (35) überbrücktes Ventil (31) vorgesehen ist und daß in der Bypaßleitung (35) eine Drossel (36) und ein Ventil (37) angeordnet sind.

8. Pumpsystem nach Anspruch 6, dadurch gekennzeichnet, daß der Auslaßbereich der Molekularpumpenstufen (4, 6) und die als Bypaßleitung ausgebildete Verbindung (11) über eine Leitung (41) miteinander verbunden sind, in welcher eine Drossel (42) und ein Ventil (43) angeordnet sind.

9. Pumpsystem nach Anspruch 6, dadurch gekennzeichnet, daß die Ansaugleitung (8, 33) der Vorvakuumpumpe (9) und die als Bypaßleitung ausgebildete Verbindung (11) über eine Leitung (44) miteinander verbunden sind, in welcher eine Drossel (47) und ein Ventil (48) angeordnet sind und daß zwischen Drossel (47) und Ventil (48) eine weitere Vorvakuumpumpe (46) angeschlossen ist.

10. Pumpsystem nach Anspruch 7, 8 oder 9, dadurch gekennzeichnet, daß die Drossel (36, 42 bzw. 47) regelbar ausgebildet ist.

## Claims

1. Pump system for a leak indicator operating according to the contraflow principle, with a first turbomolecular pump stage (3), whose inlet serves the connexion of a test sample or test recipient (1), with a second turbomolecular pump stage (5), whose inlet serves the connexion of a test gas detector (2), both turbomolecular pump stages (3, 5) being mounted on a common shaft (7'), and with a fore pump (9) associated with the outlets of the turbomolecular pump stages, characterised in that a pump stage (4 and 6 respectively) formed as a molecular pump is connected in series to each of the turbomolecular pump stages (3, 5), in that the molecular pump stages (4, 6) are mounted on the shaft (7') of the turbomolecular pump stages (3, 5), and in that there is a connexion (11, 11') between, on the one hand, the joining region from the first turbomolecular pump stage (3) to the molecular pump stage (4) connected in series thereto and, on the other hand, the joining region from the second turbomolecular pump stage (5) to the molecular pump stage (6) connected in series thereto.

2. Pump system according to claim 1, characterised in that the connexions (23, 24) for the test gas detector (2) and for the test sample or test recipient (1) are located opposite one another in each case in the region of an outer end face of the pump system, in such a manner that the two pump stage pairs (3, 4 and 5, 6) are traversed from the outside inwards during operation and that a common fore pump connexion (21) is provided between the two pump stage pairs.

3. Pump system according to claim 2, characterised in that the molecular pump stages (4, 6) have a common cylindrical drum.

4. Pump system according to claim 3, characterised in that the drum (16) is hollow and is sealed with respect to the pump chambers.

5. Pump system according to claim 3 or 4, characterised in that the drum (16) is equipped with substantially axial channels (11') to produce the connexion between the joining regions of the turbomolecular pump stages (3, 5) to the molecular pump stages (4, 6).

6. Pump system according to one of the preceding claims, characterised in that the test sample or test recipient is connectable to the induction pipe (8) of the fore pump (9) via a connecting pipe (33) with a valve (34).

7. Pump system according to claim 6, characterised in that a valve (31) bridged by a bypass pipe (35) is provided between the test sample or test recipient and the first turbomolecular pump stage (3) and in that a throttle (36) and a valve (37) are provided in the bypass pipe (35).

8. Pump system according to claim 6, characterised in that the outlet region of the molecular pump stages (4, 6) and the connexion formed as a bypass pipe (11) are joined together via a pipe (41), in which a throttle (42) and a valve (43) are provided.

9. Pump system according to claim 6, characterised in that the induction pipe (8, 33) of the fore pump (9) and the connection formed as a bypass pipe (11) are joined together via a pipe (44) in which a throttle (47) and a valve (48) are provided and in that a further fore pump (46) is connected between the throttle (47) and the valve (48).

10. Pump system according to claim 7, 8 or 9, characterised in that the throttle (36, 42 respectively 47) is adjustable.

**Revendications**

1. Système à pompe pour un appareil de détection de fuite travaillant selon le principe du contre-courant, comportant un premier étage de pompe turbomoléculaire (3) dont l'entrée sert au raccordement d'une éprouvette ou d'un récipient d'épreuve (1), comportant un second étage de pompe turbomoléculaire (5) dont l'entrée sert au raccordement d'un détecteur de gaz de test (2), étant précisé que les deux pompes turbomoléculaires (3,5) sont disposées sur un arbre commun (7'), et comportant aussi une pompe à vide préparatoire (9) disposée aux sorties des étages de pompes turbomoléculaires, système caractérisé par le fait qu'après chacun des étages de pompes turbomoléculaires (3, 5) est disposé un étage de pompe (4 ou 6) à structure de pompe moléculaire, par le fait que les étages de pompes moléculaires (4, 6) sont disposés sur l'arbre (7') des étages de pompes turbomoléculaires (3, 5) et par la fait qu'il existe une liaison (11, 11') entre d'une part la zone de transition allant du premier étage de pompe turbomoléculaire (3) à l'étage de pompe moléculaire (4) disposé après lui et d'autre part la zone de transition allant du second étage de pompe turbomoléculaire (5) à l'étage de pompe moléculaire (6) disposé après lui.

2. Système à pompe selon la revendication 1, caractérisé par le fait que les raccords (23, 24) pour le détecteur de gaz de test (2) et pour l'éprouvette ou le récipient d'épeuve (1) sont disposés, opposés l'un à l'autre, chacun dans la zone d'une face frontale extérieure du système à pompe, de façon telle que, pendant l'exploitation, les deux paires d'étages de pompes (3, 4 et 5, 6) sont parcourus de l'extérieur vers l'intérieur et par le fait qu'entre les deux paires d'étages de pompes est prévu un raccord commun (21) pour la pompe à vide préparatoire.

3. Système à pompe selon la revendication 2, caractérisé par le fait que les étages de pompes moléculaires (4, 6) présentent un tambour cylindrique commun.

4. Système à pompe selon la revendication 3, caractérisé par le fait que le tambour (16) est conçu creux et qu'il est obturé à l'égard des espaces des pompes.

5. Système à pompe selon la revendication 3 ou 4, caractérisé par le fait que le tambour (16) présente des canaux essentiellement axiaux (11') pour réaliser la liaison entre les zones de transition allant des étages de pompes turbomoléculaires (3, 5) aux étages de pompes moléculaires (4, 6).

6. Système à pompe selon l'une des revendications précédentes, caractérisé par le fait que l'éprouvette ou le récipient d'épreuve peut être relié, par l'intermédiaire d'une conduite de liaison (33) comportant une vanne (34), avec la conduite d'admission (8) de la pompe à vide préparatoire (9).

7. Système à pompe selon la revendication 6, caractérisé par le fait qu'entre l'éprouvette ou le récipient d'épreuve et le premier étage de pompe moléculaire (3) est prévue une vanne (31) qui peut être shuntée par une conduite de bypass (35) et par le fait que dans la conduite de bypass (35) sont disposés un étranglement (36) et une vanne (37).

8. Système à pompe selon la revendication 6, caractérisé par le fait que la zone de sortie des étages de pompes moléculaires (4, 6) et la liaison (11), conçue sous forme d'une conduite de bypass, sont reliés entre elles par l'intermédiaire d'une conduite (41) dans laquelle sont disposés un étranglement (42) et une vanne (43).

9. Système à pompe selon la revendication 6, caractérisé par le fait que la conduite d'admission (8, 33) de la pompe à vide préparatoire (9) et la liaison (11) conçue sous forme de conduites de bypass, sont reliées entre elles par une conduite (44) dans laquelle sont disposés un étranglement (47) et une vanne (48), et par le fait qu'entre l'étranglement (47) et la vanne (48) est reliée une autre pompe à vide préparatoire (46).

10. Système à pompe selon la revendication 7, 8 ou 9, caractérisé par le fait que l'étranglement (36, 42 ou 47) est prévu réglable.

FIG.1

FIG.2

FIG.3

FIG.4

FIG.5

FIG.6